# FASCICULE DE BREVET EUROPEEN

(11) **EP 2 617 894 B1**
(45) Date de publication et mention de la délivrance du brevet: **12.08.2020**
(21) Numéro de dépôt: 13305064.1
(22) Date de dépôt: 18.01.2013
(51) Int. Cl.: D06N 5/00, E04D 5/02, E04D 5/10, E04D 5/12, E04D 3/34

(54) **Plaque de couverture cellulosique bitumée résistante au feu et procédé de fabrication**
Feuerbeständige bitumenbeschichtete Zelluloseabdeckplatte und ihr Herstellungsverfahren
Fire-resistant bituminous cellulose cover plate and manufacturing method

(30) Priorité: 20.01.2012 FR 1250587
(43) Date de publication de la demande: 24.07.2013
(73) Titulaire: Onduline, 92150 Suresnes (FR)
(72) Inventeur: Thomas, Michel, 5100 Jambes (BE); Foutel, Martin, 27300 MENNEVAL (FR); Barre, Fabien, 76730 GONNETOT (FR); Maffei, Ilario, 55061 CAPANNORI-LUCCA (IT); Bocchin, Valter, 55011 ALTOPASCIO (LU) (IT)
(74) Mandataire: Jacobacci Coralis Harle

(56) Documents cités:
- EP-A1- 0 055 160
- EP-A1- 0 634 515
- EP-A1- 1 500 493
- EP-A2- 0 745 718
- DE-U1-202009 003 329
- US-A- 5 380 552
- US-A1- 2009 317 593
- US-B1- 6 436 510

## Description

### DOMAINE DE L'INVENTION

La présente invention concerne de manière générale des plaques en fibres de cellulose imprégnées de bitume résistantes au feu ainsi que leur procédé de fabrication. Lesdites plaques sont principalement destinées à être utilisées comme matériau de couverture, et en particulier, comme matériau de couverture pour des toitures.

### ART ANTERIEUR

Les plaques en fibres de cellulose imprégnées de bitume sont des matériaux bien connus de l'homme du métier. Elles sont généralement fabriquées à partir de papier recyclé et de forme rectangulaire. Classiquement, le papier recyclé subit une étape de traitement pour ôter les éléments non cellulosiques, tels que des agrafes par exemple, et une étape de défibrage avant de former une pâte à papier qui sera mise à plat sur une toile puis égouttée et calibrée. Il est possible d'ajouter d'autres éléments à la pâte comme par exemple des pigments dans le but d'obtenir des plaques de couverture colorées et adaptées à l'environnement architectural. La pâte en fibres de cellulose peut être ondulée à l'aide d'une machine telle que décrite dans le brevet FR 2496551 ou dans la demande européenne EP 0844071, de façon à obtenir des plaques rectangulaires dont les ondulations sont parallèles aux deux bords de la longueur. Après séchage, on obtient une plaque en fibres de cellulose qui peut être découpée à la dimension voulue. Les plaques sont ensuite trempées dans du bitume puis refroidies et éventuellement revêtues d'une couche de peinture.

Les plaques en fibres de cellulose imprégnées de bitume sont des matériaux présentant de nombreux avantages pour le domaine de la construction et de la rénovation. Ces plaques sont légères, résistantes, ultra-flexibles, faciles à installer, et peu coûteuses. Leur flexibilité permet une adaptation aux légères déformations inhérentes aux charpentes anciennes. C'est une caractéristique importante pour la rénovation de bâtiments. Leur faible poids autorise une pose sur charpente légère. L'absence de surcharge importante limite ainsi les renforcements des structures souvent nécessaires en travaux de rénovation. La coupe et le perçage de ces plaques ne nécessitent qu'un outillage très simple tel que le marteau et la scie.

Les plaques en fibres de cellulose imprégnées de bitume sont, par conséquent, très largement employées dans le domaine de la construction et de la rénovation. Toutefois, leur faible résistance à un feu extérieur pose un réel problème au vu des normes de sécurité fixées par les autorités nationales et internationales, et notamment face à celles fixées par la commission européenne. En effet, ces normes sont en constante évolution et les exigences imposées sont de plus en plus strictes.

Il existe alors un besoin d'améliorer la résistance au feu des plaques en fibres de cellulose imprégnées de bitume.

Pour impartir à un matériau une résistance au feu, il est connu de le revêtir d'un revêtement à base de graphite expansible. Le graphite expansible est un agent intumescent, qui après exposition au feu, s'expanse et crée une barrière isolante.

Le brevet US 6436510 décrit des feuillets en fibres de cellulose présentant un revêtement anti-feu comprenant du graphite expansible et un polymère thermoplastique ou thermodurcissable. Une fois revêtus du liant polymérique et du graphite expansible, les feuillets en fibres de cellulose sont ensuite enrobés de bitume puis mis sous forme de bardeaux plats utilisables comme matériaux de couverture pour toiture.

Toujours dans le domaine de la construction, le brevet US 2011/011021 décrit des palettes à base de fibres de coton. Les fibres de coton sont recouvertes de graphite expansible à l'aide d'un liant par liaison mécanique et/ou par liaison chimique. Le liant utilisé peut être n'importe quel polymère thermoplastique capable de former un film après séchage. En outre sont cités les polyacrylates, les résines époxyde, les résines en acétate de polyvinyle, les polyuréthanes ou encore les caoutchoucs thermoplastiques à base de styrène. Les palettes revêtues de la couche anti-feu peuvent ultérieurement être recouvertes de bitume modifié et ainsi servir de matériau de couverture pour toiture.

La demande de brevet US 2005/0145139 décrit un revêtement anti-feu similaire à ceux mentionnés précédemment. Ce revêtement est préparé à partir d'une composition comprenant au moins un liant polymérique de même nature que ceux utilisés dans le brevet US 6436510, des particules de graphite expansible, un vecteur tel que de l'eau ou un solvant hydrocarbure suivant la nature du polymère liant, et un pigment comme, par exemple, du dioxyde de titane, du carbonate de calcium, ou des borates. Le revêtement est ensuite séché à la température de conservation dudit matériau qui peut être, en outre, un bitume modifié ou des bardeaux. Une couche supplémentaire externe peut être appliquée pour protéger le revêtement des facteurs environnementaux tels que la pluie et le vent.

Parmi les brevets ou demandes de brevets s'intéressant à l'utilisation de revêtements à base de graphite expansible pour l'amélioration de la résistance au feu de matériaux cellulosiques, on peut aussi citer les documents WO 2004/099491, US 5968669, et US 6084008. L'une des applications visées dans ces deux derniers brevets est les matériaux de toiture.

Enfin, le document EP 0 634 515 A1, divulgue une membrane d'étanchéité destinée à être soudée à chaud, à la flamme, et qui a un comportement au feu amélioré grâce à l'utilisation d'une couche de matériau anti-feu, notamment du graphite, déposé à sec. Dans le procédé de fabrication divulgué, un tissu support est imprégné avec une solution d'un liant et/ou de bitume à chaud qui sert à fixer le matériau anti-feu. Il est également possible de recouvrir cet ensemble avec des couches de recouvrement supérieure et inférieure constituées de bitume ou bitume polymère, ce recouvrement étant fait à chaud et une étape de refroidissement est prévue ensuite. Il est d'ailleurs recommandé d'utiliser un matériau anti-feu qui se déclenche au-dessus de 300°C.

Il existe un besoin d'améliorer la résistance au feu des plaques en fibres de cellulose imprégnées de bitume.

### DESCRIPTION DETAILLEE DE L'INVENTION

L'un des buts de la présente invention est donc d'améliorer la tenue au feu de plaques en fibres de cellulose imprégnées de bitume, de façon à répondre en particulier à la norme européenne EN 13501-5.

La norme européenne EN 13501-5, décrite plus en détails dans les exemples de test de résistance au feu, définit les critères auxquels doivent répondre les toitures soumises à un feu extérieur et permet un classement des toitures en fonction de leur résistance au feu.

De manière surprenante, la demanderesse a découvert que pour former une couche suffisamment résistante au feu selon la norme européenne EN 13501-5, le graphite expansible, qui est l'agent ignifuge le plus utilisé dans le domaine des matériaux de couverture, devait être déposé par voie sèche, de préférence par pulvérisation en lit fluidisé ou par trémie, sur une couche de primaire de collage. Les méthodes classiques de l'art antérieur, telles que la pulvérisation du graphite expansible en suspension dans l'eau ou d'une dispersion du graphite expansible dans un liant polymérique, ne marchent pas car ces méthodes ne permettent pas d'obtenir une couche suffisamment homogène de graphite expansible. Dans le cas du mélange binaire « eau/graphite expansible », le problème repose principalement sur une instabilité du mélange conduisant à une séparation des phases dans le circuit de pulvérisation. Cette instabilité peut en partie être corrigée par l'augmentation de la viscosité de la phase dispersante, en l'occurrence celle de l'eau. Cependant, cette augmentation de la viscosité de la phase dispersante entraîne des difficultés de mise en œuvre d'un dépôt par pulvérisation. Dans le cas du mélange binaire « liant polymérique/graphite expansible », les problèmes principaux sont d'une part, un problème de dispersion des particules de graphite expansible dans le liant polymérique du fait d'affinités électrostatiques entre les deux phases, et d'autre part, un problème de pulvérisation. Pour surmonter le problème technique lié au dépôt par pulvérisation et à l'homogénéité de la couche de graphite, la demanderesse a mis au point un procédé qui consiste à déposer d'abord une couche de primaire de collage sur les plaques de couverture, puis à déposer, par voie sèche, de préférence par pulvérisation en lit fluidisé ou par trémie, un revêtement anti-feu comprenant du graphite expansible.

La présente invention a donc pour objet des plaques en fibres de cellulose imprégnées de bitume à protection antifeu selon la revendication 1.

La couche de primaire de collage et le revêtement anti-feu à base de graphite expansible sont en contact direct. La couche de primaire de collage est en contact direct (i) avec le revêtement anti-feu comprenant du graphite expansible, et (ii) avec la plaque en fibres de cellulose imprégnées de bitume.

Par revêtement anti-feu, on entend un revêtement qui permette une protection contre l'incendie de matériaux inflammables tels que le bitume et les fibres de cellulose, c'est-à-dire retardant ou stoppant la propagation et la pénétration du feu.

La présente invention a aussi pour objet un procédé de fabrication des plaques telles que définies ci-dessus. Plus précisément, ce procédé comprend (a) le dépôt d'un primaire de collage sur au moins une des surfaces principales de la plaque en fibres de cellulose imprégnées de bitume, (b) le dépôt par voie sèche, sur la couche de primaire de collage comprenant une résine thermoplastique, d'un revêtement anti-feu comprenant du graphite expansible, et (c) le dépôt d'une couche de peinture sur le revêtement anti-feu, ladite peinture étant de nature vinylique ou acrylique ou ayant un polymère qui est le même que celui du primaire de collage.

La présente invention a encore pour objet l'utilisation des plaques telles que définies ci-dessus comme matériau de couverture pour toitures.

Dans la présente demande, lorsqu'un article comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact direct avec ledit substrat/revêtement), et (iii) ne recouvre pas nécessairement le substrat/revêtement complètement. Lorsque "une couche 1 est localisée sous une couche 2", on comprendra que la couche 2 est plus éloignée du substrat que la couche 1.

Selon l'invention, les plaques en fibres de cellulose imprégnées de bitume utilisées pour le dépôt du primaire de collage et le dépôt du revêtement anti-feu sont fabriquées selon un procédé parfaitement connu de l'homme du métier. Ce procédé qui est exemplifié dans la présente demande comprend les étapes principales suivantes :
- la fabrication d'une feuille de carton à partir de fibres de celluloses ;
- l'enduction d'une des faces de la feuille de carton par une résine thermodurcissable contenant éventuellement des pigments ;
- optionnellement, l'ondulation de la feuille de carton ;
- le séchage et la découpe de la feuille de carton ;
- l'imprégnation à cœur de la feuille de carton dans du bitume à chaud.

Selon l'invention, les plaques en fibres de cellulose imprégnées de bitume utilisées pour le dépôt du primaire de collage et le dépôt du revêtement anti-feu comprennent typiquement 40 à 60% en poids de bitume par rapport au poids total desdites plaques imprégnées. Elles comprennent typiquement 40 à 60% en poids de fibres de cellulose par rapport au poids total desdites plaques imprégnées. Elles comprennent typiquement 0,5 à 2% en poids de résine thermodurcissable par rapport au poids total desdites plaques imprégnées.

Dans un mode particulier de réalisation, les plaques en fibres de cellulose imprégnées de bitume comprennent 0,5 à 2% en poids de pigments par rapport au poids total desdites plaques imprégnées.

Dans un autre mode particulier de réalisation, elles comprennent 5 à 12% en poids de charges minérales par rapport au poids total desdites plaques imprégnées.

La liste des constituants des plaques en fibres de cellulose imprégnées de bitume donnée ci-dessus n'est bien entendu pas limitative.

Le bitume utilisé est un mélange de matières hydrocarbonées d'origine naturelle issues de la fraction lourde obtenue lors de la distillation du pétrole, ou provenant de gisements naturels se présentant sous forme solide ou liquide, de densité de 0,8 à 1,2. Sont également admis comme bitumes au sens de l'invention les bitumes modifiés par incorporation d'additifs de toute nature tels que des additifs en vue d'améliorer les caractéristiques d'adhésivité, en vue d'apporter artificiellement les propriétés nécessaires à la mise en émulsion cationique, par incorporation d'élastomères, sous forme de poudre de caoutchouc ou autre, ou bien encore les bitumes améliorés par l'addition de polymères de différents types ; cette liste n'étant bien entendu pas limitative.

Les fibres de cellulose sont typiquement des fibres de celluloses recyclées issues de vieux papiers, cartons ou journaux par exemple ; la liste n'étant pas limitative.

La résine thermodurcissable est une résine ou un mélange de résines choisies de préférence parmi les résines époxydes, les résines polyuréthanes, les résines polyurées, les résines polyurée-formaldéhydes, les résines mélamines-formaldéhydes, les résines époxyvinylesters ou les résines vinylesters ; la liste n'étant pas limitative.

Les pigments sont de préférence des oxydes métalliques tels que l'oxyde de fer ou l'oxyde de chrome ; la liste n'étant pas limitative. L'oxyde de fer permet d'obtenir quasiment toutes les couleurs. Le rôle des pigments est notamment d'obtenir des plaques de couverture colorées adaptables à l'environnement architectural.

Les charges minérales sont principalement apportées par les grades de vieux papier recyclé utilisé pour former la pâte à papier qui sert à fabriquer les plaques en fibres de celluloses imprégnées de bitume. Les charges minérales sont typiquement des carbonates, des silicates et des aluminates. Dans un mode particulier de l'invention, ces charges minérales peuvent être ajoutées dans les fibres de cellulose recyclées à l'étape de défibrage ou à l'étape d'égouttage.

Dans un mode particulier de l'invention, les plaques en fibres de cellulose imprégnées de bitume utilisées pour le dépôt du primaire de collage et le dépôt du revêtement anti-feu présentent des ondulations destinées notamment à collecter de l'eau. Comme décrit dans le brevet FR 2755712, les ondulations peuvent être de forme régulière et sensiblement sinusoïdale. Les plaques peuvent également présenter une alternance d'ondes et de zones plates. Par ailleurs, les ondulations peuvent être différentes, par exemple, de type crénelé ou en V.

Dans la présente invention, les ondulations sont de préférence sinusoïdales. La hauteur des ondulations sinusoïdales est généralement de 10 à 100 mm, et de préférence de 30 à 45 mm. Le rapport entre l'amplitude des ondulations et leur pas varie de préférence de 1/2 à 1/1.

Le grammage des plaques en fibres de cellulose imprégnées de bitume avant le dépôt du primaire de collage et le dépôt du revêtement anti-feu est généralement supérieur à 0,8 kg/m², et avantageusement supérieur à 2,6 kg/m².

Dans la présente demande, tous les grammages sont rapportés à la surface développée de la plaque ondulée. Dans le cas où les ondulations sont parallèles à la longueur de la plaque, la surface développée de la plaque ondulée est obtenue en multipliant la longueur de la plaque ondulée par la largeur développée de la plaque ondulée, c'est-à-dire par la distance suivant au plus près le profil de l'ondulation de la plaque. Dans le cas où les ondulations sont parallèles à la largeur de la plaque, la surface développée de la plaque ondulée est obtenue en multipliant la largeur de la plaque ondulée par la longueur développée de la plaque ondulée, c'est-à-dire par la distance suivant au plus près le profil de l'ondulation de la plaque.

L'épaisseur des plaques en fibres de cellulose imprégnées de bitume avant le dépôt du primaire de collage et le dépôt du revêtement anti-feu est généralement au minimum de 1,5 mm, de préférence elle est supérieure à 2 mm, et mieux encore, elle varie de 2,5 à 3,5 mm.

Selon l'invention, les plaques en fibres de cellulose imprégnées de bitume décrites précédemment sont revêtues d'une couche de primaire de collage et d'un revêtement anti-feu comprenant du graphite expansible.

Le primaire de collage a principalement pour rôle de favoriser l'adhésion des couches ultérieures dans le produit final, en particulier l'adhérence et la cohésion des particules de graphite expansible.

En effet, lorsque la plaque en fibres de cellulose selon l'invention vient d'être imprégnée de bitume et qu'elle est encore chaude, les couches de bitumes présentes sur les surfaces principales supérieure et inférieure de ladite plaque sont éphémères et ne subsistent que quelques secondes. De ce fait, lesdites couches de bitume éphémères ne peuvent servir de couches adhésives pour immobiliser le revêtement anti-feu, et en particulier pour immobiliser le graphite expansible. Ce problème technique n'est pas observé dans le cas des plaques ou membranes de toiture à base de fibres de polyester et/ou polyamide, car lorsque celles-ci sont imprégnées de bitumes, elles présentent sur leurs surfaces principales supérieure et inférieure des couches de bitumes suffisamment stables qui, lorsqu'elles sont encore chaudes, jouent le rôle de couches adhésives et permettent d'immobiliser des particules de graphite expansible.

Le primaire de collage comprend de préférence un liant polymérique. Le liant polymérique est de préférence un polymère ou un mélange de polymères choisi parmi les résines thermoplastiques telles que les résines polyvinyliques, les résines polyvinylidéniques, les résines polyacryliques, les résines méthacryliques, ou les résines polystyréniques; la liste n'étant pas limitative. Un exemple de résine thermoplastique préférée est un polymère du type acétate de vinyle.

La couche de primaire de collage dans le produit final correspond à un grammage en matières sèches généralement de 10 à 200 g/m², et de préférence de 20 à 70 g/m².

Le revêtement anti-feu de l'invention comprend du graphite expansible. Ce revêtement est de préférence directement en contact avec la couche de primaire de collage. Le procédé de dépôt du revêtement anti-feu comprenant du graphite expansible est décrit plus loin.

Le graphite expansible de la présente invention a typiquement une structure cristalline composée d'atomes de carbone formant des plans empilés parallèlement dans lesquels ont été insérées des molécules d'acide, comme par exemple, des molécules d'acide sulfurique ou d'acide nitrique. Lorsque le graphite expansible est exposé au feu ou à une flamme, les molécules d'acide se décomposent en générant du gaz. La pression de ce gaz oblige alors les plans graphitiques à s'écarter ce qui engendre une dilatation du graphite. Le volume des particules de graphite peut ainsi être multiplié par un facteur de plus de 80 en quelques secondes. Le graphite ainsi dilaté a une faible densité ; il n'est pas combustible et constitue un bon isolant thermique du fait qu'il réfléchit une partie de la chaleur radiante.

D'autres avantages connus du graphite expansible sont, en outre, qu'il est d'origine naturelle, qu'il n'est pas polluant et qu'il ne se dissout pas dans l'eau. Le graphite expansé sert d'agent ignifuge grâce à une réaction de combustion endothermique, mais surtout grâce à la formation d'une barrière isolante après expansion. Il permet aussi de diminuer la conductivité thermique d'un matériau. La propagation des flammes est limitée et le rayonnement thermique est faible. Le graphite expansible garantit en outre une faible densité de la fumée et réduit considérablement le dégoulinement du liant bitumeux.

Dans la présente invention, le graphite expansible a de préférence un coefficient d'expansion supérieur à 70 cm³/g, et avantageusement supérieur à 120 cm³/g lorsqu'il est exposé à une température de 600°C.

Le graphite expansible est généralement sous forme de paillettes pulvérisables. La taille des particules est typiquement de 50 à 600 µm, et préférentiellement de 150 à 400 µm.

Des particules de graphite expansible sont disponibles dans le commerce auprès d'un grand nombre de fournisseurs. Elles ont une température de "déclenchement" (température à laquelle débute l'expansion du graphite après exposition à une flamme pendant quelques secondes) allant généralement de 130°C à 500°C.

La température d'inflammation d'une plaque en fibres de cellulose imprégnées de bitume selon l'invention est plus faible que celle d'une plaque ou d'une membrane bitumée à base de fibres de polyesters et/ou polyamides. La température d'inflammation d'une plaque en fibres de cellulose imprégnées de bitume selon l'invention est typiquement inférieure à 300°C, notamment inférieure à 190°C. Par exemple, elle est de 130°C à 270°C. De ce fait, le graphite expansible selon l'invention a de préférence une température de déclenchement inférieure à 300°C. Par exemple, elle est de 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C. Dans des modes particuliers de réalisation, elle est de 160°C ou de 220°C. Des résultats particulièrement satisfaisants sont obtenus pour des températures de déclenchement du graphite expansible allant de 120°C à 220°C, notamment de 160°C à 220°C ou de 120°C à 180°C. De très bons résultats sont obtenus pour une température de déclenchement minimale de 160°C. La couche de graphite expansible dans le produit final correspond à un grammage en matières sèches généralement de 50 à 300 g/m², et de préférence de 80 à 140 g/m². Ce grammage correspond à un « grammage moyen » sur toute la surface développée de la plaque selon l'invention. Les meilleurs résultats d'accrochage de flamme et donc de résistance au feu des plaques selon l'invention sont obtenus lorsque l'homogénéité de la répartition du graphite expansible est optimale, c'est-à-dire lorsque le « grammage local » de la couche de graphite expansible dans le produit final est au moins de 80g/m² en matières sèches en tout point de ladite plaque. Selon l'invention, on entend par « point » une surface développée allant de 1cm² à 900cm² (par exemple 30cmx30cm, soit la taille d'un brandon utilisé pour les tests anti-feu décrits plus loin), notamment allant de 1cm² à 100cm², de préférence allant de 1cm² à 2cm². La mesure du grammage local du graphite expansible peut par exemple être réalisée à l'aide d'étiquettes adhésives dont la taille correspond à la taille de la surface développée à tester (par exemple de 2cm² si on veut tester des zones ayant une surface développée allant de 1cm² à 2cm²). Cette mesure se fait par calcul différentiel. Par exemple, d'une part, on pose une étiquette adhésive sur une plaque en fibres de cellulose imprégnées de bitume comprenant une couche de primaire de collage. On retire l'étiquette ; ce qui permet de prélever le primaire de collage présent sur la zone testée. On calcule ensuite la quantité de primaire de collage prélevée en pesant l'étiquette avant et après le prélèvement. D'autre part, on effectue la même opération, avec une étiquette de même taille, sur la même plaque mais comprenant cette fois-ci, en plus, une couche de graphite expansible sur la couche de primaire de collage. Cette deuxième opération permet de quantifier la quantité de primaire de collage et de graphite expansible présents dans la zone testée. La quantification massique de graphite expansible se fait alors par différence entre (i) la mesure de la quantité de primaire de collage et de graphite expansible, et (ii) la mesure de la quantité de primaire de collage.

Dans un mode particulier de réalisation, la plaque en fibres de cellulose imprégnées de bitume revêtue de la couche de primaire de collage et du revêtement anti-feu peut aussi comporter une couche de peinture déposée sur le revêtement anti-feu. La couche de peinture a pour rôle principal d'améliorer la bonne tenue du graphite dans le temps. Elle est également employée pour un effet esthétique. La peinture utilisable dans la présente invention est typiquement de nature vinylique ou acrylique. Le polymère présent dans la couche de peinture est généralement le même que celui du primaire de collage. La couche de peinture correspond à un grammage en matières sèches généralement de 50 à 300 g/m², et de préférence de 100 à 200 g/m².

La présente invention a aussi pour objet un procédé de fabrication des plaques en fibres de cellulose imprégnées de bitume traitées anti-feu telles que décrites ci-dessus.

Ce procédé comprend (a) le dépôt d'un primaire de collage sur au moins une des surfaces principales de la plaque en fibres de cellulose imprégnées de bitume et (b) le dépôt par voie sèche, sur la couche de primaire de collage, d'un revêtement anti-feu comprenant du graphite expansible.

Dans un mode particulier de la présente invention, le procédé comprend une étape de dépôt d'une couche de peinture sur le revêtement anti-feu.

Le dépôt du primaire de collage est fait par pulvérisation, par enduction en utilisant en outre un rouleau ou une brosse, ou par tout autre mode connu de l'homme du métier, le mode préféré étant la pulvérisation. Cette pulvérisation est mise en œuvre, par exemple, à l'aide de buses de balayage telles que celles classiquement utilisées par l'homme du métier pour le dépôt d'une couche de peinture sur une plaque de couverture. Un exemple de mise en œuvre du dépôt du primaire de collage par pulvérisation est détaillé plus loin dans la présente demande. Le primaire de collage est pulvérisé sur au moins une des surfaces principales de la plaque en fibres de cellulose imprégnées de bitume, de préférence au moins la surface de la plaque présentant la couche de résine thermodurcissable éventuellement pigmentée décrite précédemment. Les buses sont orientées de telle manière que la couche de primaire de collage soit la plus homogène possible. La couche de primaire de collage correspond à un grammage en matières sèches généralement de 10 à 200 g/m², et de préférence de 20 à 70 g/m².

Le dépôt par voie sèche du revêtement anti-feu comprenant du graphite expansible se fait sur une plaque en fibres de cellulose imprégnées de bitume comportant sur au moins une de ses surfaces principales une couche de primaire de collage, ladite plaque ayant de préférence une température inférieure à 160°C, notamment inférieure à 120°C. En effet, le phénomène d'expansion du graphite n'est pas réversible, c'est-à-dire qu'une fois que le graphite expansible a atteint sa température de déclenchement, il s'expanse et ne reviendra pas à son état initial non-expansé si on le refroidit à une température inférieure à sa température de déclanchement. Au cours du procédé de fabrication d'une plaque en fibres de cellulose imprégnées de bitume selon l'invention, la température de séchage de la plaque en fibres de cellulose est d'environ 260°C et la température du bitume lors de l'étape d'imprégnation à chaud est d'environ 190°C. La température de déclanchement du graphite expansible selon l'invention étant de préférence inférieure à 300°C, par exemple de 120°C à 180°C ou encore de 160°C à 220°C pour les raisons citées précédemment de température d'inflammation de la plaque selon l'invention, le graphite expansible ne peut être déposé qu'après les étapes de séchage de la plaque en fibres de cellulose et d'imprégnation du bitume à chaud. On évite ainsi l'expansion du graphite expansible lors du processus de fabrication de la plaque selon l'invention et avant l'usage de ladite plaque en tant que toiture anti-feu.

Le dépôt par voie sèche du revêtement anti-feu comprenant du graphite expansible est préférentiellement réalisé par gravité, en particulier par trémie, ou par pulvérisation, et de façon avantageuse par pulvérisation du graphite expansible en lit fluidisé. Le dépôt par pulvérisation du graphite expansible en lit fluidisé est préféré au dépôt par trémie car il permet d'obtenir une couche de graphite expansible plus homogène et donc plus résistante au feu.

Le dépôt par gravité, en particulier par trémie, consiste à faire défiler la plaque présentant la couche de primaire de collage telle que définie précédemment, sous une trémie (ou réservoir) remplie du graphite expansible ; la surface de la plaque présentant la couche de primaire de collage étant exposée face à la trémie pour que le dépôt du graphite expansible se fasse sur la couche de primaire de collage. La trémie est de préférence équipée en point bas d'un rouleau moleté dont on peut faire varier la vitesse et la position relative par rapport à la paroi de la trémie (correspondant à la taille d'ouverture de la lèvre), le rouleau moleté servant à distribuer le graphite en fonction des quantités requises et de la vitesse de défilement de la plaque. Le rouleau moleté permet également d'obtenir une meilleure répartition du graphite expansible et donc d'améliorer la résistance au feu de la plaque selon l'invention.

La pulvérisation du graphite expansible en lit fluidisé consiste à mettre le graphite expansible en suspension dans un tourbillon de courant gazeux de telle sorte que le graphite expansible, qui est un solide, se comporte comme un liquide. Les particules sèches de graphite expansible sont placées dans un conteneur à lit fluidisé. Le courant gazeux est préférentiellement injecté en dessous des particules de graphite expansible de façon à propulser les particules dans le tourbillon de courant gazeux et à former un nuage de particules en suspension dans le courant gazeux. Le courant gazeux utilisé dans la présente invention est préférentiellement un courant d'air ayant une pression variant de 2 à 3 Bar, et mieux encore une pression de 2,5 Bar. La suspension de graphite expansible dans le courant gazeux est ensuite pulvérisée sur la surface principale de la plaque présentant la couche de primaire de collage. La pulvérisation est de préférence effectuée à l'aide de buses ayant une ouverture qui de préférence n'est pas circulaire et dont la surface varie de 45 à 60 mm², de préférence de 50 à 52 mm², et mieux encore elle est de 51,17mm². Un courant d'air de 2 à 3 Bar permet un débit de particules sèches de graphite expansible variant de 400 à 500 g/min par buse. La quantité de graphite expansible déposée dépend de la quantité et de la nature du liant polymérique de la couche de primaire de collage définie précédemment. Par exemple, pour une couche de primaire de collage contenant un acétate de vinyle et correspondant à un grammage en matières sèches allant de 20 à 70 g/m², la quantité de graphite expansible déposée varie de 80 à 140 g/m². Le dépôt par voie sèche du graphite expansible se fait de préférence jusqu'à saturation physique de la surface de la couche de primaire de collage. L'excès de graphite expansible est ensuite éliminé par soufflage. Sur la plaque, il ne reste ainsi que les particules de graphite expansible en contact avec le primaire de collage.

Le dépôt de la couche de peinture est fait par pulvérisation, par enduction en utilisant en outre un rouleau ou une brosse, ou par tout autre mode connu de l'homme du métier, le mode préféré étant la pulvérisation. Cette pulvérisation est mise en œuvre, par exemple, à l'aide de buses de balayage telles que celles classiquement utilisées par l'homme du métier pour le dépôt d'une couche de peinture sur une plaque de couverture. La couche de peinture correspond à un grammage en matières sèches généralement de 50 à 300 g/m², et de préférence de 100 à 200 g/m².

La présente invention a encore pour objet une plaque en fibres de cellulose imprégnées de bitume susceptible d'être obtenue par le procédé selon l'invention.

La présente invention a encore pour objet l'utilisation d'une plaque en fibres de cellulose imprégnées de bitume telle que définie dans la présente invention comme matériau de couverture pour toitures. De manière générale, les plaques en fibres de cellulose imprégnées de bitume de la présente invention sont utilisables dans l'industrie du bâtiment, dans la construction ou la rénovation des toitures. Les plaques selon l'invention sont par exemple utilisables comme accessoires de toiture tels que, sans limitation, des faîtières, des rives, et des costières.

Les exemples ci-dessous illustrent la présente invention sans la limiter.

### EXEMPLES

### A) Plaques en fibres de cellulose imprégnées de bitume utilisées pour le dépôt de la couche primaire et celui du revêtement anti-feu

### a. Matériaux

Des exemples de plaques sont les plaques onduline CLASSIC®, onduline ONDUTOIT®, onduline ONDUVILLA®, ou onduline DURO 235® fabriquées par la société ONDULINE. Toutes ces plaques ont un grammage supérieur à 2,6kg/m², sauf les plaques ONDUTOIT® qui ont un grammage de 2,2kg/m². Les plaques onduline CLASSIC® sont des plaques ondulées ayant un poids de 6,4 kg, une longueur de 200 cm, une largeur de 95 cm, une épaisseur de 3 mm, et des ondulations ayant une hauteur de 38 mm.

Les plaques onduline ONDUTOIT® sont des plaques ondulées idéales pour la couverture de petits bâtiments de stockage (industriels et agricoles), bâtiments annexes et de loisirs. Ce sont des plaques bitumées monocouches, pigmentées dans l'épaisseur, avec résine thermodurcissable. Les plaques ont une longueur de 200 cm, une largeur de 95 cm, une épaisseur de 2,60 mm, une profondeur d'onde de 38 mm, un pas d'onde de 95 mm, un nombre d'ondes de 9 à 10, et une masse de 5,60 kg. Leur résistance à l'éclatement lorsqu'elles sont sèches est de 17 bars.

Les plaques onduline ONDUVILLA® sont des tuiles ondulées ayant une épaisseur de 3 mm, une profondeur d'onde de 40 mm, une longueur de 40 cm et une largeur de 106 cm. Sont aussi incluses dans les exemples de plaques, les plaques ayant la même épaisseur et la même profondeur d'ondes que les tuiles onduline ONDUVILLA® mais qui ont une longueur de 200 cm et une largeur de 106 cm.

Les plaques onduline DURO 235® sont des plaques ondulées idéales pour la couverture de petits bâtiments de stockage (industriels et agricoles), bâtiments annexes et de loisirs. Ce sont des plaques bitumées monocouches, pigmentées dans l'épaisseur, avec résine thermodurcissable. Les plaques ont une longueur de 200 cm, une largeur de 95 cm, une épaisseur de 3,00 mm, une profondeur d'onde de 38 mm, un pas d'onde de 95 mm, un nombre d'ondes de 10, et une masse de 6,75 kg. Leur résistance à l'éclatement lorsqu'elles sont sèches est de 19 bars.

Les plaques onduline CLASSIC®, onduline ONDUTOIT®, onduline ONDUVILLA®, et onduline DURO 235® contiennent 44% en poids de fibres de cellulose, 8% en poids de charges minérales, 46% en poids de bitumes, 1% en poids de résine thermodurcissable et 1% en poids de pigment.

### b. Procédé de fabrication

Un exemple de procédé de fabrication desdites plaques comprend les étapes suivantes qui sont bien connues de l'homme du métier :
- la fabrication d'une pâte à papier à partir de vieux papier débarrassé de tous déchets étrangers comme le plastique par exemple ;
- la mise à plat de la pâte à papier sur une table plate pour un égouttage naturel de la pâte ;
- l'aspiration et le pressage de la pâte afin d'obtenir une feuille de carton ;
- l'enduction par rouleaux, sur l'une des faces de la feuille de carton, d'une résine thermodurcissable contenant des pigments tels que l'oxyde de fer ou l'oxyde de chrome ;
- l'ondulation mécanique de la feuille de carton
- le séchage et la découpe de la feuille de carton ;
- l'imprégnation à cœur de la feuille de carton dans du bitume à chaud.

### B) Polymères utilisés pour le primaire de collage

Des exemples de compositions de primaire de collage utilisées dans la présente invention sont des émulsions aqueuses à 40% en acétate de vinyle. L'acétate de vinyle est, par exemples, l'axilat AOD 515 distribué par la société Hexion ou le Mowilith LDM 1851 distribué par la société Celanese. L'axilat AOD 515 qui est généralement utilisé pour des formulations de peinture est vendu sous forme d'émulsion aqueuse à 50%. Dans la présente invention, il est donc dilué à 40% avant application.

### C) Graphite expansible utilisé pour le revêtement anti-feu

Des exemples non limitatifs de particules de graphite expansible utilisées dans la présente invention sont le graphite expansible PX200 ou PX85 distribué par la société Alphamin, ou encore le graphite expansible S90 ou S7 distribué par la société Netexium. A titre d'exemple, les particules PX85 comprennent 95% en poids de carbone, 4% en poids de cendre, 0,5% en poids d'acides libres et 6,8% en poids de sulfates. Ces particules ont un pH de 3 à 7. Elles ont un coefficient d'expansion de 200 cm³/g et 80% d'entre elles ont une taille nominale de 180 µm.

Des exemples types de particules utilisables pour la présente invention sont des particules de grades 160-80, 160-50, 220-80, ou 220-50. Le premier chiffre indique la température en degré Celsius à laquelle débute l'expansion du graphite, et le deuxième chiffre correspond à la taille des particules en Mesh.

### D) Peinture utilisée pour la couche de peinture

Un exemple de peinture préférée utilisée dans la présente invention est la peinture ISOLA fabriquée par Onduline. D'autres exemples de peinture sont toutes peintures extérieures pour bois en phase aqueuse.

### E) Procédés de fabrication d'une plaque en fibres de cellulose imprégnées de bitume comportant une couche de primaire de collage, un revêtement anti-feu et une couche de peinture

Une plaque en fibres de cellulose imprégnées de bitume de type onduline CLASSIC®, onduline ONDUTOIT®, onduline ONDUVILLA®, ou onduline DURO 235® fabriquée par la société ONDULINE et telle que décrite précédemment est placée sur un tapis convoyeur automatisé de telle sorte que la surface exposée soit la surface présentant la couche de résine thermodurcissable pigmentée.

Le tapis convoyeur conduit la plaque dans une première cabine en acier inoxydable équipée de buses de balayage contenant le primaire de collage. Dans le présent exemple, le primaire de collage est une émulsion aqueuse à 40% en acétate de vinyle de type Axilat AOD 515. L'émulsion est pulvérisée sur la surface exposée de la plaque, c'est-à-dire sur la surface présentant la couche de résine thermodurcissable pigmentée. Les buses de balayage sont orientées de telle manière que la couche de primaire de collage soit la plus homogène possible. La couche de primaire de collage correspond à un grammage en matières sèches de 50 g/m².

Après le dépôt du primaire de collage, le tapis convoyeur entraine la plaque en dehors de la première cabine pour une vérification par l'homme du métier de la couche déposée.

Avant que la couche de primaire de collage ne sèche, le tapis convoyeur entraine la plaque dans une deuxième cabine pour mettre en œuvre le dépôt du revêtement anti-feu. Le graphite expansible utilisé est par exemple du PX200 ou PX85 distribué par Alphamin ou du S90 ou S7 distribué par Netexium.

Dans le cas du dépôt par trémie, la cabine comporte une trémie équipée en point bas d'un rouleau moleté dont on peut faire varier la vitesse et qui sert à distribuer le graphite en fonction des quantités requises et de la vitesse de défilement de la plaque. Par exemple, pour déposer sur une plaque 100 g/m² de graphite expansible sec, à une cadence de 500 plaques par heure, la vitesse linéaire du tapis convoyeur est ajustée entre 15 m/min et 20 m/min, de préférence 18 m/min, la vitesse du rouleau moleté de diamètre 85 mm est ajustée de 20 tr/min à 30 tr/min, de préférence 26 tr/min, et la position relative du rouleau moleté par rapport à la paroi de la trémie est réglée de manière à obtenir une ouverture de la lèvre de 0 mm à 1 mm, de préférence 0,1 mm.

Dans le cas du dépôt par pulvérisation par lit fluidisé, la cabine est équipée de 8 buses ayant chacune une ouverture de 51,17 mm². Les buses sont reliées à un conteneur à lit fluidisé contenant le graphite expansible et un système permettant de créer un courant d'air.

Les particules sèches de graphite expansible placées dans le conteneur à lit fluidisé sont mises en suspension dans un tourbillon de courant d'air avant d'être pulvérisées par les buses sur la surface de la plaque de couverture présentant la couche de primaire de collage non séchée. Le courant d'air est injecté en dessous des particules de graphite expansible de façon à les propulser dans le tourbillon de courant gazeux et à former un nuage de particules en suspension dans le courant gazeux. Le courant d'air est de 2,5 Bar et permet un débit de particules sèches de graphite expansible de 455 g/min par buse, soit un débit total de particules sèches de graphite expansible de 3640 g/min pour 8 buses. La couche de graphite expansible dans le produit final correspond à un grammage en matières sèches d'au moins 80 g/m² en tout point de la plaque ayant une surface développée allant de 1cm² à 2cm².

Après le dépôt du revêtement anti-feu comprenant le graphite expansible, le tapis convoyeur entraine la plaque en dehors de la deuxième cabine pour une vérification par l'homme du métier de la couche déposée.

La plaque est ensuite éventuellement entraînée dans une troisième cabine en acier inoxydable pour le dépôt d'une couche de peinture. La troisième cabine est équipée de buses de balayage classiquement utilisée par l'homme du métier pour le dépôt de peinture sur des plaques de couverture. La peinture utilisée est de la peinture ISOLA de chez ONDULINE. Elle est pulvérisée à travers les buses sur la couche de revêtement anti-feu précédemment déposée. La couche de peinture correspond à un grammage en matières sèches de 140 à 150 g/m².

### F) Tests de résistance des plaques de la présente invention à un feu extérieur selon la norme européenne EN 13 501-5

La norme européenne EN 13 501-5 permet un classement au feu des produits de constructions et des éléments de bâtiments en fonction de leur résistance au feu. Les méthodes d'essai employées pour tester les toitures exposées à un feu extérieur sont définies dans la norme XP ENV 1187. Cette norme regroupe quatre types de tests :
- Le test 1 est réalisé avec des brandons (paniers) enflammés. Il est basé sur la norme allemande DIN 4102-7.
- Le test 2 est réalisé avec des brandons enflammés en présence de vent. Il est basé sur la norme scandinave Nordtest NT Fire 006.
- Le test 3 est réalisé avec des brandons enflammés en présence de vent et de chaleur rayonnante. Ce test est basé sur l'arrêté du 10 septembre 1970 du ministère de l'intérieur français. Il définit les classes et indice T30/1.
- Le test 4 est réalisé en deux temps avec des brandons enflammés en présence de vent et de chaleur rayonnante. Il est basé sur la norme britannique BS 476/3.

Chaque test est indépendant. Il n'existe pas d'ordre prédéterminé pour les réaliser. Chaque test définit les critères auxquels doivent répondre les plaques soumises à un feu extérieur ainsi que les conditions dans lesquelles les plaques sont testées.

Seuls les tests 1 et 3 sont détaillés ci-dessus. Toutefois, les plaques selon l'invention ont aussi répondu positivement aux tests 2 et 4.

### a. Tests 1

Les tests 1 ont été réalisés avec des plaques ondulées ayant une longueur de 1,8 m, une largeur de 0,8 m, une épaisseur de 3 mm, et des ondulations ayant une hauteur de 38 à 40 mm. Les plaques contiennent 44% en poids de fibres de cellulose, 8% en poids de charges minérales, 46% en poids de bitume, 1% en poids de résine thermodurcissable et 1% en poids de pigment. Certaines plaques ont été testées telles quelles, c'est-à-dire sans couche de primaire de collage ni revêtement anti-feu ; elles sont nommées ci-après « plaques sans revêtement anti-feu ». Elles constituent les témoins des tests 1 et 3. Des plaques conformes à l'invention, nommées ci-après « plaques avec revêtement anti-feu », ont été testées avec les revêtements suivants :
- une couche de primaire de collage à base d'acétate de vinyle (axilat AOD 515) d'un grammage en matières sèches de 30 à 50 g/m²,
- un revêtement anti-feu à base de graphite expansible de type PX85 d'un grammage local en matières sèches d'environ 100 g/m² en tout point ayant une surface développée allant de 1cm² à 2cm².
- une couche de peinture vinylique de type ISOLA, d'un grammage en matières sèches de 140 g/m² à 150 g/m².

Les conditions du test 1 sont les suivantes :
- La pente de la toiture est de 15° ou de 45°.
- Le brandon est un panier de 300 mm x 300 mm x 200 mm avec 600g de paille de pin.
- L'arrêt du test est effectué lorsqu'il y a un arrêt total du feu.

Les plaques répondant positivement au test sont classées Bₜₒᵢₜᵤᵣₑ et celles répondant négativement au test sont classées Fₜₒᵢₜᵤᵣₑ.

Le tableau ci-dessous présente les résultats au test 1.

| **Critères principaux** | **Critères de classement** | **Plaques sans revêtement anti-feu** | **Plaques avec revêtement anti-feu** |
|---|---|---|---|
| Propagation extérieure du feu vers le haut | < 0,7 m | > 0,7 m (feu) | < 0,7 m |
| Longueur brûlée maximale | < 0,8 m | > 0,8 m (feu) | < 0,8 m |

| Points incandescents pénétrant la toiture | Aucun | Feu sous la plaque | Aucun |
|---|---|---|---|
| **Classement au feu** | **Bₜₒᵢₜᵤᵣₑ** | **Fₜₒᵢₜᵤᵣₑ** | **Bₜₒᵢₜᵤᵣₑ** |

### b. Tests 3

Les tests 3 ont été réalisés avec des plaques similaires à celles utilisées pour le test 1. Les seuls critères changeant sont la longueur des plaques qui est alors de 2 m au lieu de 1,8 m, et la largeur des plaques qui est de 1,2 m au lieu de 0,8 m.

Les conditions du test 3 sont les suivantes :
- La pente de la toiture est fixée à 30°.
- Le brandon est un panier en fibre de bois de dimensions 55 mm x 55 mm x 32 mm imbibé de n-heptane.
- Le vent appliqué a une vitesse de 3 m/s.
- Le panneau radiant fournissant la chaleur rayonnante a une puissance de 12,5 kW/m².
- L'arrêt du test est effectué lorsqu'il y a un arrêt total du feu.

Les plaques répondant positivement au test 3 sont classées Bₜₒᵢₜᵤᵣₑ, Cₜₒᵢₜᵤᵣₑ ou Dₜₒᵢₜᵤᵣₑ suivant leur degré de résistance, les plaques Bₜₒᵢₜᵤᵣₑ étant les plus performantes et les plaques Dₜₒᵢₜᵤᵣₑ étant les moins performantes. Les plaques répondant négativement au test sont classées Fₜₒᵢₜᵤᵣₑ.

Le tableau ci-dessous présente les résultats au test 3.

| **Critères principaux** | **Critères de classement** | | | **Plaques sans revêtement anti-feu** | **Plaques avec revêtement anti-feu** |
|---|---|---|---|---|---|
| Temps de propagation extérieure du feu (TE) | TE > 30 min | TE > 10 min | TE > 10 min | TE < 5 min | TE > 30 min |
| Temps jusqu'à la pénétration du feu (TP) | TP > 30 min | TP > 15 min | TP > 5 min | TP < 5 min | TP > 30 min |
| **Classement au feu** | **Bₜₒᵢₜᵤᵣₑ** | **Cₜₒᵢₜᵤᵣₑ** | **Dₜₒᵢₜᵤᵣₑ** | **Fₜₒᵢₜᵤᵣₑ** | **Bₜₒᵢₜᵤᵣₑ** |

Les résultats des tests 1 et 3 montrent que les plaques en fibres de cellulose de la présente invention répondent bien aux différents critères de classement anti-feu de la norme EN 13501-5, contrairement aux plaques ne présentant pas de revêtement anti-feu.

D'autres tests ont montré que les plaques traitées selon l'invention avaient une très bonne aptitude au vieillissement (exposition UV, cycles gel/dégel, abrasion humide).

Le dépôt du graphite expansible par voie sèche, et en particulier par pulvérisation en lit fluidisé ou par trémie, est donc une méthode performante pour obtenir une couche de graphite expansible suffisamment homogène pour obtenir le résultat recherché qui est d'améliorer la résistance au feu.

## Revendications

1. Plaque en fibres de cellulose imprégnées de bitume à protection antifeu comportant :
- par dépôt sur au moins une de ses surfaces principales de la plaque en fibres de cellulose imprégnées de bitume, une couche de primaire de collage, la couche de primaire de collage comprenant une résine thermoplastique à base de polymère,
- un revêtement anti-feu comprenant du graphite expansible déposé par voie sèche sur la couche de primaire de collage : et
- une couche de peinture déposée sur le revêtement anti-feu, ladite peinture étant de nature vinylique ou acrylique ou ayant un polymère qui est le même que celui du primaire de collage.

2. Plaque en fibres de cellulose imprégnées de bitume selon la revendication 1, **caractérisée en ce que** le graphite expansible a un coefficient d'expansion supérieur à 120 cm³/g à 600°C.

3. Plaque en fibres de cellulose imprégnées de bitume selon l'une quelconque des revendications 1 et 2, **caractérisée en ce que** le graphite expansible a une température de déclenchement inférieure à 300°C.

4. Plaque en fibres de cellulose imprégnées de bitume selon l'une quelconque des revendications 1 à 3, **caractérisée en ce que** le graphite expansible a une température de déclenchement allant de 160°C à 220°C.

5. Plaque en fibres de cellulose imprégnées de bitume selon l'une quelconque des revendications 1 à 4, **caractérisée en ce que** le grammage moyen en matières sèches de graphite expansible varie de 80 à 140 g/m².

6. Plaque en fibres de cellulose imprégnées de bitume selon l'une quelconque des revendications 1 à 5, **caractérisée en ce que** le grammage local en matières sèches de graphite expansible est au moins de 80g/m² en tout point ayant une surface développée allant de 1 à 900 cm².

7. Plaque en fibres de cellulose imprégnées de bitume selon la revendications 6, **caractérisée en ce que** le grammage local en matières sèches de graphite expansible est au moins de 80g/m² en tout point ayant une surface développée allant de 1 à 2 cm².

8. Plaque en fibres de cellulose imprégnées de bitume selon l'une quelconque des revendications précédentes, **caractérisé en ce que** le grammage en matière sèche de la couche de primaire de collage est de 20 à 70 g/m² et que le grammage en matière sèche du graphite expansible est de 80 à 140 g/m².

9. Plaque en fibres de cellulose imprégnées de bitume selon l'une quelconque des revendications précédentes, **caractérisée en ce qu'**elle comporte des ondulations.

10. Plaque en fibres de cellulose imprégnées de bitume selon l'une quelconque des revendications précédentes, **caractérisée** en ce la résine thermoplastique à base de polymère de la couche de primaire de collage est choisie parmi les résines polyvinyliques, les résines polyvinylidéniques, les résines polyacryliques, les résines méthacryliques, les résines polystyréniques, seules ou en mélange et en ce qu'elle est de préférence du type acétate de vinyle.

11. Procédé de fabrication d'une plaque en fibres de cellulose imprégnées de bitume à protection antifeu selon l'une quelconque des revendications 1 à 10 comprenant (a) le dépôt d'un primaire de collage comprenant une résine thermoplastique sur au moins une des surfaces principales de la plaque en fibres de cellulose imprégnées de bitume et (b) le dépôt par voie sèche, sur la couche de primaire de collage comprenant une résine thermoplastique, d'un revêtement anti-feu comprenant du graphite expansible, et (c) le dépôt d'une couche de peinture sur le revêtement anti-feu, ladite peinture étant de nature vinylique ou acrylique ou ayant un polymère qui est le même que celui du primaire de collage .

12. Procédé selon la revendication 11, **caractérisé en ce que** le revêtement anti-feu est déposé par pulvérisation en lit fluidisé.

13. Procédé selon la revendication 11, **caractérisé en ce que** le revêtement anti-feu est déposé par trémie.

14. Procédé selon la revendication 13, **caractérisé en ce que** le revêtement anti-feu est déposé par une trémie équipée en point bas d'un rouleau moleté.

15. Utilisation d'une plaque en fibres de cellulose imprégnées de bitume selon l'une quelconque des revendications 1 à 10 comme matériau de couverture pour toitures.

## Patentansprüche

1. Feuerbeständige Platte aus bitumengetränkten Zellulosefasern mit
- einer durch Auftragen auf wenigstens eine der Hauptflächen der Platte aus bitumengetränkten Zellulosefasern erhaltenen Schicht einer Klebegrundierung, wobei die Klebegrundierung ein thermoplastisches Harz auf Polymerbasis aufweist,
- einer feuerbeständigen Beschichtung, die auf die Klebegrundierungsschicht trocken aufgetragenes ausdehnbares Graphit aufweist, und
- einer auf die feuerbeständige Beschichtung aufgetragenen Schicht Farbe, wobei die Farbe vom Vinyl- oder Acryl-Typ ist oder ein Polymer enthält, das das gleiche wie jenes der Klebegrundierung ist.

2. Platte aus bitumengetränkten Zellulosefasern gemäß Anspruch 1, **dadurch gekennzeichnet, daß** das ausdehnbare Graphit einen Ausdehnungskoeffizienten von mehr als 120 cm³/g bei 600 °C aufweist.

3. Platte aus bitumengetränkten Zellulosefasern gemäß einem der Ansprüche 1 und 2, **dadurch gekennzeichnet, daß** das ausdehnbare Graphit eine Auslösetemperatur von unter 300 °C aufweist.

4. Platte aus bitumengetränkten Zellulosefasern gemäß einem der Ansprüche 1 bis 3, **dadurch gekennzeichnet, daß** das ausdehnbare Graphit eine Auslösetemperatur von 160 °C bis 220 °C aufweist.

5. Platte aus bitumengetränkten Zellulosefasern gemäß einem der Ansprüche 1 bis 4, **dadurch gekennzeichnet, daß** das mittlere Trockenmaterialgewicht an ausdehnbarem Graphit von 80 bis 140 g/m² variiert.

6. Platte aus bitumengetränkten Zellulosefasern gemäß einem der Anspräche 1 bis 5, **dadurch gekennzeichnet, daß** das örtliche Trockenmaterialgewicht an ausdehnbarem Graphit an jeder Stelle mit einer abgewickelten Oberfläche von 1 bis 900 cm² wenigstens 80 g/m² beträgt.

7. Platte aus bitumengetränkten Zellulosefasern gemäß Anspruch 6, **dadurch gekennzeichnet, daß** das örtliche Trockenmaterialgewicht an ausdehnbarem Graphit an jeder Stelle mit einer abgewickelten Oberfläche von 1 bis 2 cm² wenigstens 80 g/m² beträgt.

8. Platte aus bitumengetränkten Zellulosefasern gemäß einem der vorangehenden Ansprüche, **dadurch gekennzeichnet, daß** das Trockenmaterialgewicht der Klebegrundierungsschicht 20 bis 70 g/m² beträgt und daß das Trockenmaterialgewicht des ausdehnbaren Graphits 80 bis 140 g/m² beträgt.

9. Platte aus bitumengetränkten Zellulosefasern gemäß einem der vorangehenden Ansprüche, **dadurch gekennzeichnet, daß** sie Wellungen aufweist.

10. Platte aus bitumengetränkten Zellulosefasern gemäß einem der vorangehenden Ansprüche, **dadurch gekennzeichnet, daß** das thermoplastische Harz auf Polymerbasis der Klebegrundierungsschicht unter den Polyvinylharzen, den Polyvinylidenharzen, den Polyacrylharzen, den Methacrylharzen, den Polystyrenharzen, sowohl allein als auch gemischt, ausgewählt ist und daß es vorzugsweise vom Vinylacetattyp ist.

11. Verfahren zum Herstellen einer feuerbeständigen Platte aus bitumengetränkten Zellulosefasern gemäß einem der Ansprüche 1 bis 10, das (a) das Auftragen einer Klebegrundierung, die ein thermoplastisches Harz auf Polymerbasis aufweist, auf wenigstens eine der Hauptflächen der Platte aus bitumengetränkten Zellulosefasern und (b) das trockene Auftragen einer ein ausdehnbares Graphit aufweisenden feuerbeständigen Beschichtung auf die Klebegrundierungsschicht und (c) das Auftragen einer Schicht Farbe auf die feuerbeständige Beschichtung, wobei die Farbe vom Vinyl- oder Acryl-Typ ist oder ein Polymer enthält, das das gleiche wie jenes der Klebegrundierung ist, aufweist.

12. Verfahren gemäß Anspruch 11, **dadurch gekennzeichnet, daß** die feuerbeständige Beschichtung durch Aufsprühen in einer Wirbelschicht erhalten wird.

13. Verfahren gemäß Anspruch 11, **dadurch gekennzeichnet, daß** die feuerbeständige Beschichtung durch Auftragen mittels eines Behälters erhalten wird.

14. Verfahren gemäß Anspruch 13, **dadurch gekennzeichnet, daß** die feuerbeständige Beschichtung durch Auftragen mittels eines am unteren Ende mit einer geriffelten Rolle versehenen Behälters erhalten wird.

15. Verwendung einer Platte aus bitumengetränkten Zellulosefasern gemäß einem der Ansprüche 1 bis 10 als Abdeckmaterial für Dächer.

## Claims

1. A fireproof bitumen-impregnated cellulose fiber sheet, comprising:
- through deposition on at least one of main surfaces of the bitumen-impregnated cellulose fiber sheet of an adhesive primer layer, the adhesive primer layer comprising a thermoplastic resin that is polymer based,
- a fire-proof layer comprising expandable graphite deposited through dry process on the adhesive primer layer, and
- a layer of paint deposited on the fire-proof layer, said paint being of the vinyl or acrylic nature or having a polymer that is the same as that of the adhesive primer.

2. The bitumen-impregnated cellulose fiber sheet according to claim 1, **characterized in that** the expandable graphite has an expansion coefficient higher than 120 cm³/g at 600°C.

3. The bitumen-impregnated cellulose fiber sheet according to any one of claims 1 and 2, **characterized in that** the expandable graphite has a trigger temperature lower than 300°C.

4. The bitumen-impregnated cellulose fiber sheet according to any one of claims 1 to 3, **characterized in that** the expandable graphite has a trigger temperature ranging from 160°C to 220°C.

5. The bitumen-impregnated cellulose fiber sheet according to any one of claims 1 to 4, **characterized in that** the mean dry matter basis weight of expandable graphite varies from 80 to 140 g/m².

6. The bitumen-impregnated cellulose fiber sheet according to any one of claims 1 to 5, **characterized in that** the local dry matter basis weight of expandable graphite is at least of 80 g/m² in any point having a developed surface ranging from 1 cm² to 900 cm².

7. The bitumen-impregnated cellulose fiber sheet according to claim 6, **characterized in that** the local dry matter basis weight of expandable graphite is at least of 80 g/m² in any point having a developed surface ranging from 1 to 2 cm².

8. The bitumen-impregnated cellulose fiber sheet according to any one of previous claims, **characterized in that** the dry matter basis weight of the adhesive primer layer is from 20 to 70 g/m², and the dry matter basis weight of the expandable graphite is from 80 to 140 g/m².

9. The bitumen-impregnated cellulose fiber sheet according to any one of previous claims, **characterized in that** it includes corrugations.

10. The bitumen-impregnated cellulose fiber sheet according to any one of previous claims, **characterized in that** the polymer based thermoplastic resin of the adhesive primer layer is selected from polyvinyl resins, polyvinylidene resins, polyacrylic resins, methacrylic resins or polystyrene resins, alone or as a mixture, and **in that** it is preferably of the vinyl acetate type.

11. A method of manufacturing a fireproof bitumen-impregnated cellulose fiber sheet according to any one of claims 1 to 10, comprising (a) depositing an adhesive primer comprising a thermoplastic resin on at least one of the main surfaces of the bitumen-impregnated cellulose fiber sheet, (b) depositing through dry deposition, on the adhesive primer layer comprising a thermoplastic resin, of a fireproof coating comprising expandable graphite, and (c) depositing a layer of paint on the fireproof coating, said paint being of the of the vinyl or acrylic nature or having a polymer that is the same as that of the adhesive primer.

12. The method according to claim 11, **characterized in that** the fireproof coating is deposited by fluidized bed spray deposition.

13. The method according to claim 11, **characterized in that** the fireproof coating is deposited by hopper deposition.

14. The method according to claim 13, **characterized in that** the fireproof coating is deposited through a hopper equipped, at the lower end, with a knurled roll.

15. The use of a bitumen-impregnated cellulose fiber sheet according to any one of claims 1 to 10 as a roof covering material.
